# EUROPEAN PATENT SPECIFICATION

(11) **EP 4 588 230 B1**
(45) Date of publication and mention of the grant of the patent: **14.10.2026**
(21) Application number: 22865912.4
(22) Date of filing: 20.12.2022
(51) Int. Cl.: H04L 65/1069, H04L 65/65, H04L 65/80, H04L 69/16, H04L 69/321, H04L 69/326

(54) **HIGHER-LAYER CONTROL OF TCP-LAYER PROCESSING BASED ON REPORTING OF TCP-ERROR COUNT**
STEUERUNG DER TCP-SCHICHTVERARBEITUNG AUF DER BASIS DER MELDUNG DER TCP-FEHLERZAHL
COMMANDE PAR COUCHE SUPÉRIEURE DE TRAITEMENT DE COUCHE TCP BASÉ SUR LE RAPPORT DE COMPTAGE D'ERREURS TCP

(43) Date of publication of application: 23.07.2025
(73) Proprietor: GOOGLE LLC, Mountain View CA 94043 (US)
(72) Inventor: CHUNG, Chi-Wen, Mountain View, CA 94043 (US); CHUEH, Han-Jung, Mountain View, CA 94043 (US)
(74) Representative: Thorniley, Peter
(86) International application number: PCT/US2022/082045
(87) International publication number: WO 2024/136895

(56) References cited:
- US-B2- 11 088 788
- GURBANI V K ET AL: "TRANSPORT PROTOCOL CONSIDERATIONS FOR SESSION INITIATION PROTOCOL NETWORKS", BELL LABS TECHNICAL JOURNAL, WILEY, CA, US, vol. 9, no. 1, 1 May 2004 (2004-05-01), pages 83 - 97, XP001217440, ISSN: 1089-7089, DOI: 10.1002/BLTJ.20006

## Description

### BACKGROUND

When a user of a communication device directs the device to initiate a voice over Internet Protocol (VoIP) call or other packet-based real-time media session with a called party, the device may responsively engage in packet-based session setup signaling with a call server and/or with the called party's device, in an effort to set up the call.

For instance, using the industry standard Session Initiation Protocol (SIP), the calling device may first send to the server a packet-based SIP INVITE message that carries an identifier of the called party (e.g., a called phone number), the calling device may then receive from the server a packet-based SIP 200 OK message confirming that the call is being set up, and the calling device may then send to the server a packet-based SIP ACK message to complete setup of an originating call leg, such as a Real-time Transport Protocol (RTP) session, between the calling device and the server. Further, upon receipt of the SIP INVITE message from the calling device, the server may engage in similar SIP signaling with the called party's device to set up a terminating call leg, such as an RTP session, between the server and the called device. The server may then bridge together the originating and terminating call legs, to enable the calling and called parties to communicate with each other.

US patent 11,088,788 discloses that a video encoding device (e.g., a wireless transmit/receive unit (WTRU)) may transmit an encoded frame with a frame sequence number using a transmission protocol. The video encoding device, an application on the video encoding device, and/or a protocol layer on the encoding device may detect a packet loss by receiving an error notification. The packet loss may be detected at the MAC layer. The packet loss may be signaled using spoofed packets, such as a spoofed NACK packet, a spoofed XR packet, or a spoofed ACK packet. A lost packet may be retransmitted at the MAC layer (e.g., by the encoding device or another device on the wireless path). Packet loss detection may be performed in uplink operations and/or downlink operations, and/or may be performed in video gaining applications via the cloud. The video encoding device may generate and send a second encoded frame based on the error notification.

GURBANI V K ET AL: "TRANSPORT PROTOCOL CONSIDERATIONS FOR SESSION INITIATION PROTOCOL NETWORKS". BELL LABS TECHNICAL JOURNAL, WILEY, CA, US, vol. 9, no. 1, 1 May 2004 (2004-05-01), pages 83-97, focuses on SIP transport as a decisive factor in engineering low-latency, scalable, carrier-grade SIP entities. It also presents a concept of SIP connection management and the persistent connection model.

### OVERVIEW

One technical issue with setting up a VoIP call or other packet-based real-time media session is signaling latency. When a user places a call, the user may expect the call to be set up very quickly. However, mechanics of the packet-based session-setup signaling process may introduce undesirable delay in the call setup, which may result in poor user experience.

In order for two devices to engage in packet-based communication with each other, each device may implement a protocol stack that defines a sequence of logical processing layers. Under the Internet Protocol suite, for instance, the protocol stack may range, top down, from an application layer to a transport layer (e.g., Transport Control Protocol (TCP) layer), to a network layer (e.g., IP layer), to a data-link layer (e.g., Media Access Control (MAC) layer), and to a physical layer, among possibly other layers. Each device may be configured to process data sequentially through the layers of such a stack, with the transmitting device processing data downward through the stack and taking specific action at each layer (e.g., segmenting data, adding layer-specific headers, etc.), and the receiving device then processing data upward through the stack and taking layer-specific action at each layer (e.g., stripping headers, recombining segments, etc.)

With this arrangement, the devices can communicate with each other at corresponding layers of their respective protocol stacks, with each successive layer of their corresponding protocol stacks operating on the communication along the way. For instance, a layer of the transmitting device could generate a communication to the corresponding layer of the receiving device, and the communication could pass down through the protocol stack of the transmitting device, over the physical transmission medium between the devices, and then up through the protocol stack of the receiving device to the destination corresponding layer.

SIP is an application-layer protocol. When a calling device seeks to initiate a VoIP call or other packet-based real-time media session, the device may therefore generate at the application layer a SIP INVITE directed to a call server and pass the generated SIP INVITE message down to the TCP layer for processing. At the TCP layer, the device may then segment the SIP INVITE message into multiple chunks, encapsulate each chunk in a TCP header specifying source and destination TCP port numbers and a TCP sequence number, and pass each resulting TCP packet (or "TCP segment") down to the IP layer for processing. At the IP layer, the device may then encapsulate each TCP packet in an IP header specifying source and destination IP addresses and pass each resulting IP packet down to the MAC layer for processing. At the MAC layer, the device may then segment and encapsulate each IP packet into frames appropriate for a physical transmission medium. And at the physical layer, the device may then output the resulting frames for transmission over a physical communication path to the server. Further, the calling device may engage in similar processing for each additional SIP message that the calling device sends to the server.

Likewise, when the server sends a SIP message, such as a SIP 200 OK response message, to the calling device, the calling device may receive the SIP message as a series of frames at the physical layer and reverse the processes described above at each layer until the SIP message reaches the application layer. For instance, the device may reverse the process at the MAC layer to uncover IP packets, the device may reverse the process at the IP layer to uncover TCP packets, and the device may reverse the process at the TCP layer to uncover the SIP message for processing by the application layer.

One source of delay in the SIP signaling process is errors that may occur at the TCP layer.

TCP is a connection-oriented protocol in which devices establish a TCP session (TCP socket) with each other and use sequence numbering and an acknowledgement scheme to help ensure their successful communication of TCP packets. In particular, each device may include in the header of each TCP packet that it sends to the other device a respective sequence number, with each TCP packet's sequence number generally increasing from the sequence number of the transmitting device's last TCP-packet transmission by a quantity equal to the number of payload bytes in that last transmission (or by just 1 during an initial TCP handshake process in which TCP packets may contain no payload data). Upon receipt of each such TCP-packet transmission, the receiving device may then send to the transmitting device a TCP acknowledgement (ACK) that specifies the expected sequence number of the transmitting device's next TCP-packet transmission. Further, the transmitting device may expect to receive such an ACK for each such TCP-packet transmission by the expiration of a retransmission timer, such as three seconds, after the TCP layer of the transmitting device passes the TCP packet to the IP layer for processing.

Various latency-causing errors could occur in this TCP process.

For example, a TCP "retransmission" error could occur where a device transmits a TCP packet and the device does not receive an associated TCP ACK by the expiration of the retransmission timer, at which point the device may engage in retransmission of the TCP packet. Further, the device may allow up to a maximum number (e.g., five) such retransmissions of a given TCP packet before concluding that the TCP transmission has altogether failed, at which point the TCP layer may send a FAIL response to the application layer. As another example, a TCP "duplicate ACKs" error could occur where a device receives multiple ACKs specifying the same sequence number as each other, which the receiving device may send to the transmitting device as a way let the transmitting device know of a detected missing TCP packet, and which may lead to retransmission.

As yet another example, a TCP "out-of-order" error could occur where a device receives a TCP packet with a sequence number higher than what the device has acknowledged so far. When that happens, the receiving device may let the transmitting device know of the error by sending an ACK with the expected sequence number instead of the sequence number of the received TCP packet, which may also lead to retransmission. Further, as a related example, a TCP "previous segment not captured" error could occur where a device receives a TCP packet with sequence number N but where there is no earlier TCP packet from the same TCP session whose sequence number plus data length equals N. When this happens, the receiving device may likewise let the transmitting device know of the error by sending an ACK with the expected sequence number instead, which may similarly lead to retransmission.

Any of these and/or other TCP errors may add delay to the SIP-message transmission process. Further, for a given SIP-message transmission, numerous such TCP errors or instances of TCP errors might occur, which may combine to substantially delay setup of an associated VoIP call or other packet-based real-time media session.

In practice, the application layer may also apply its own timer for receiving a SIP response when the application layer provides a SIP message transmission. For instance, once the application layer sends a SIP message to the TCP layer for processing, the application layer may set a Request-Timeout timer and expect to receive a SIP response message by the expiration of that timer. If the application layer does not receive a SIP response by expiration of the SIP timer, the application layer may conclude that setup of the packet-based real-time media session has failed, which may itself create user-experience problems.

Disclosed herein is a mechanism that may help to address session-setup delay arising from occurrence of one or more TCP-layer errors. In accordance with the disclosure, when the application layer sends a SIP message to the TCP layer for processing (whether directly or through one or more intermediate layers), the TCP layer will enter into a reporting mode in which the TCP layer will keep the application layer apprised of a TCP-layer error count for the SIP message, and the application layer will use the TCP-error count as a basis to dynamically restart TCP processing of the SIP message. For example, each time any one of the above-noted TCP errors or one or more other TCP errors occurs, the TCP layer could signal to the application layer to report a current count of TCP errors that have occurred in processing of the SIP message. Further, each time the application layer receives such a report from the TCP layer, the application layer may determine if the reported count is at least as high as a predefined threshold value. If the application layer determines that the count is at least as high as the predefined threshold value, then the application layer may responsively trigger TCP connection-recovery (i.e., TCP connection recovery or reestablishment) and could then again provide the SIP message for processing.

Optimally through this process, the application layer may gain useful control over session-setup delay introduced by the TCP layer. For instance, by setting the error-count threshold to an appropriate level, the application layer may trigger TCP connection-recovery more quickly than if the application layer would merely wait for TCP processing to fail overall, such as for the TCP layer to send a FAIL message to the application layer.

Note also that the TCP layer in this process may not be aware of the fact that the data that the TCP layer has received for processing is a SIP message. Therefore, the disclosed principles need not be limited to SIP-message transmission or, for that matter, even to packet-based session-setup signaling, but may extend more generally to any data transmission. Further, the disclosed principles also need not be limited to interaction between the application layer and the TCP layer but may extend more generally to interaction between (i) any protocol-stack layer higher than the TCP layer and (ii) the TCP layer.

Accordingly, in one respect, disclosed is a method for controlling TCP-layer processing in a device having a protocol stack that defines a sequence of logical layers through which the device is configured to process data for outbound transmission from the device, the sequence of logical layers including a TCP layer and a higher layer that is earlier in the sequence than the TCP layer. According to the method, when the device has passed the data from the higher layer down to the TCP layer for processing of the data at the TCP layer, the device will report from the TCP layer to the higher layer a count of how many TCP errors have occurred in processing of the data at the TCP layer, and the device will use the reported count at the higher layer as a basis to control restarting of TCP-layer processing of the data.

In another respect, disclosed is a device. The device includes a processor, non-transitory data storage, and program instructions stored in the non-transitory data storage and executable by the processor to define a protocol stack having a sequence of logical layers for processing data for outbound transmission from the device, the sequence of logical layers including a TCP layer and a higher layer that is earlier in the sequence than the TCP layer. **In** accordance with the program instructions, when the processor has passed the data from the higher layer down to the TCP layer for processing of the data at the TCP layer, the processor will report from the TCP layer to the higher layer a count of how many TCP errors have occurred in processing of the data at the TCP layer, and the processor will use the reported count at the higher layer as a basis to control restarting of TCP-layer processing of the data.

**In** yet another respect, disclosed is a non-transitory computer-readable medium having stored thereon program instructions executable by a processor of a device to define a protocol stack having a sequence of logical layers for processing data for outbound transmission from the device, the sequence of logical layers including a TCP layer and a higher layer that is earlier in the sequence than the TCP layer. In accordance with the program instructions, when the processor has passed the data from the higher layer down to the TCP layer for processing of the data at the TCP layer, the processor will report from the TCP layer to the higher layer a count of how many TCP errors have occurred in processing of the data at the TCP layer, and the processor will use the reported count at the higher layer as a basis to control restarting TCP-layer processing of the data.

In still another respect, disclosed is a system that includes various means for carrying out each of the operations described herein.

These as well as other aspects, advantages, and alternatives will become apparent to those of ordinary skill in the art by reading the following detailed description, with reference where appropriate to the accompanying drawings. Further, it should be understood that the descriptions provided in this summary and below are intended to illustrate the invention by way of example only and not by way of limitation.

### BRIEF DESCRIPTION OF THE DRAWINGS

Figure 1 is an illustration of an example communication system in which various disclosed principles could be applied.
Figure 2 is a message flow diagram depicting an example SIP signaling process.
Figure 3 is a simplified illustration of an example protocol stack.
Figure 4 is a message flow diagram depicting an example TCP handshake process.
Figure 5 is a message flow diagram depicting an example TCP transmission and acknowledgement scheme.
Figure 6 is a message flow diagram depicting an example process in accordance with the disclosure.
Figure 7 is a message flow diagram depicting another example process in accordance with the disclosure.
Figure 8 is a message flow diagram depicting another example process in accordance with the disclosure.
Figure 9 is a message flow diagram depicting another example process in accordance with the disclosure.
Figure 10 is a message flow diagram depicting another example process in accordance with the disclosure.
Figure 11 is a message flow diagram depicting another example process in accordance with the disclosure.
Figure 12 is a flow chart depicting an example method.
Figure 13 is a simplified block diagram of an example device.

### DETAILED DESCRIPTION

Example methods, devices, and systems are described herein. It should be understood, however, that any disclosed embodiment is not necessarily to be construed as preferred or advantageous over other embodiments unless stated as such. Further, it should be understood that variations from the specific arrangements and processes disclosed are possible. For instance, various disclosed entities, components, connections, operations, and other elements could be added, omitted, distributed, replicated, re-located, re-ordered, combined, or changed in other ways. In addition, it will be understood that various disclosed technical operations could be implemented at least in part by a processing unit programmed to carry out the operations or to cause one or more other entities to carry out the operations.

The present description will address example implementation in the context of VoIP call setup where a mobile calling device (call-originating device) engages in SIP signaling through a cellular wireless network with a call server that will bridge the VoIP call with a called party, and where the calling device manages SIP signaling at an application layer. However, as noted above, the disclosed principles could apply in other scenarios as well. For instance, the principles could apply with respect to other data communications, other protocol-stack layers, other types of devices, and/or other network connections. Further, as to VoIP call setup, the disclosed principles could apply with respect to SIP signaling directly between the calling and called party devices and/or with other forms of session-setup signaling. Other variations could be possible as well.

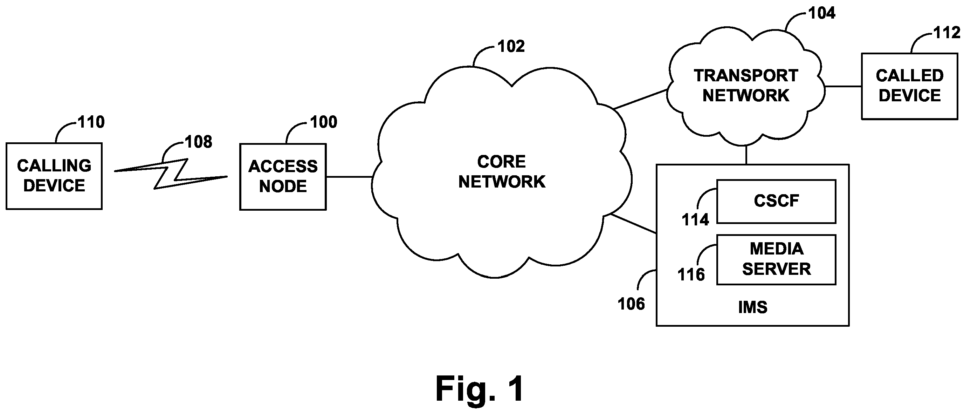

Referring to the drawings, as noted above, Figure 1 is a simplified diagram of an example communication system in which various disclosed principles could be applied. The example communication system includes a cellular wireless communication network having an access node 100, such as an evolved Node B (eNodeB), and a core network 102 that provides connectivity with a transport network 104 such as the internet. Further, the example system includes an Internet Multimedia Subsystem (IMS) 106 that could function as the call server discussed above, supporting setup and bridging of VoIP calls for instance. In addition, shown served by the access node 100 over a radio frequency (RF) air interface 108 is an example calling device 110, such as a cell phone for instance, and shown accessible through the transport network 104 is an example called device 112, such as another cell phone (possibly served by the same or another cellular system).

The access node 100 could be configured to provide coverage and service on one or more radio frequency (RF) carriers, each defining a respective cell in which the access node 100 could serve user equipment devices (UEs) over a defined air-interface, according to a defined air-interface protocol or radio access technology such as 4G Long Term Evolution (LTE), 5G New Radio (5G NR), or others. Further, the core network 102 could be a packet-switched network, such as an Evolved Packet Core (EPC) network or Next Generation Core (NGC) core network, among other possibilities, and could include both a user-plane subsystem through which UE bearer communications could flow to and from the transport network 104, and a control-plane subsystem supporting functions such as UE authentication, mobility management, and bearer management, among others.

The IMS 106 could support VoIP call service and other packet-based real-time media sessions. To facilitate this, the IMS 106 could include a call session control function (CSCF) 114 that supports SIP signaling, and a media server 116 that supports RTP communications. (In practice, the IMS 106 may include multiple CSCFs, including a proxy CSCF (P-CSCF), an interrogating CSCF (I-CSCF), and a serving CSCF (S-CSCF), with CSCF 114 being the S-CSCF.) The IMS could be accessible through transport network 104 and/or through or as part of the core network 102. Thus, when the calling device 110 is served by the access node 100, the calling device 110 may engage in SIP signaling with the CSCF 114 via the air interface 108, the access node 100, the core network 102, and possibly the transport network 104, to facilitate setup of a VoIP call with the called device 112, among other possibilities.

With this arrangement, the calling device 110 and the CSCF 114 could be the endpoints for example SIP signaling carried over TCP as discussed above. In particular, when a user of the calling device 110 seeks to place a call to a user of the called device 112 such as by directing the called device to initiate a call to a phone number assigned to the called device 112, the calling device 110 may engage in SIP signaling with the CSCF 114 to set up that call.

To facilitate this call setup signaling, if the calling device 110 is not yet registered with the IMS 106, the calling device 110 may engage in a SIP registration process with the CSCF 114. For instance, the calling device 110 may send to the CSCF 114 a SIP REGISTER message, and, after authentication and other processing by the IMS, the CSCF 114 may respond to the calling device 110 with a SIP 200 OK message, completing the registration process.

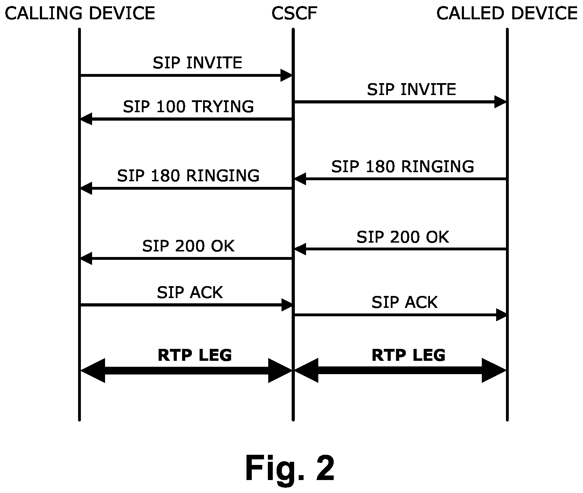

Once the calling device 110 is registered with the IMS 106, the calling device may engage in SIP signaling with the CSCF 114 to initiate a VoIP call with the called party, and the CSCF 114 (possibly in conjunction with a remote IMS) may responsively engage in SIP signaling with the called device 112 to set up the call. The SIP signaling involved in this process could take various forms, an example of which is illustrated in Figure 2.

As shown in Figure 2, the calling device 110 first sends to the CSCF 114 a SIP INVITE message carrying a SIP address of the called party, and the CSCF 114 responds by sending a corresponding SIP INVITE message to the called device 112 and sending a SIP 100 TRYING message to the calling device 112. Once the called device 112 starts ringing to alert the called party, the called device 112 then responds with a SIP 180 RINGING message, in response to which the CSCF 114 then sends a corresponding SIP 180 RINGING message to the calling device 110. Further, once the called party answers the call at the called device 112, the called device 112 responds with a SIP 200 OK message, in which to which the CSCF 114 then sends a corresponding SIP 200 OK message to the calling device 110. The calling device 110 then sends to the CSCF 114 a SIP ACK message, completing setup of an originating RTP call leg between the calling device 110 and the IMS 106, the CSCF 114 sends a corresponding SIP ACK message to the called device 112, completing setup of a terminating RTP call leg between the IMS 106 and the called device 112, and the IMS 106 bridges these call legs together to enable the calling and called parties to talk with each other.

As noted above, to facilitate engaging in SIP signaling, the calling device 110 may include a protocol stack defining a sequence of logical processing layers including an application layer that handles SIP signaling and a TCP layer that handles transport control.

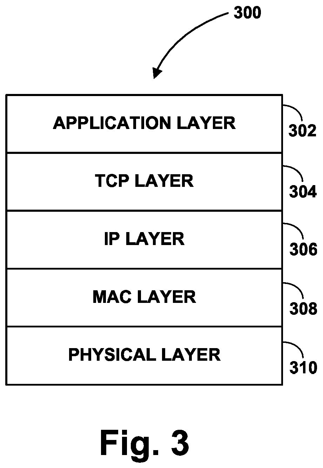

Figure 3 illustrates an example such protocol stack 300 that the calling device 110 may implement for this and other purposes. As shown, the example protocol stack 300 includes, from top to bottom, an application layer 302, a TCP layer 304, an IP layer 306, a MAC layer 308, and a physical layer 310, some functions of which were described above. The example protocol stack may also include other layers and may take still other forms. For instance, the example protocol stack may include a session layer between the application layer 302 and the TCP layer 304, which could function to handle negotiation of RTP session parameters, among other possibilities.

Each of these logical processing layers could be defined by a respective set of program logic, such as a respective program module, executable by a processor at the calling device 110 to carry out the operations of the processing layer, among other possibilities. Characterization of a layer as carrying out a function may therefore mean that the device carries out the function such as by executing program instructions that define the layer.

In line with the discussion above, when the calling device 110 seeks to send a SIP message to the CSCF 114, the application layer 302 of the calling device 110 may generate the SIP message and may pass the SIP message down the stack 300, with the SIP message flowing, directly or through one or more intervening layers (which may alter the message in a manner not presently pertinent), as data to the TCP layer 304. Further in line with the discussion above, the TCP layer may then engage in processing to facilitate communication of this data to a corresponding TCP layer at the CSCF 114. For instance, the TCP layer may break the data into chunks and add to each chunk a TCP header with an associated sequence number, and the calling device 110 may engage in processing of the resulting TCP packets at lower layers in an effort to facilitate ultimate communication to the CSCF 114. Likewise, when the CSCF 114 seeks to send a SIP message to the calling device 110, the application layer of the CSCF 114 could similarly generate the SIP message, and the SIP message could flow as data to a TCP layer of the CSCF 114, which could work to communicate the data to the TCP layer of 304 of the calling device 110.

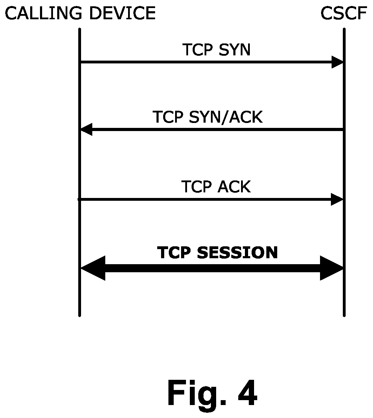

When the calling device 110 seeks to initiate SIP communication with the CSCF 114, if the calling device 110 and CSCF 114 do not yet have an established TCP session with each other for this purpose, they may first engage in a TCP handshake process to establish a TCP session. This TCP handshake process could be a three-way handshake process, as illustrated by Figure 4.

As shown in Figure 4, the calling device 110 may first send to the CSCF 114 a TCP SYN message, which may be a TCP packet having no payload but having header parameters indicating that it is a SYN message and indicating a sequence number selected by the calling device 110. Upon receipt of this TCP SYN message, the CSCF 114 may then respond with a TCP SYN/ACK message, acknowledging the calling device's SYN message and providing its own SYN message, with no payload but with header parameters (i) indicating that it is a SYN/ACK message, (ii) indicating a sequence number selected (for the SYN) selected by the CSCF 114, and (iii) indicating an ACK number that is one more than the sequence number in the calling device's SYN message. In turn, upon receipt of this SYN/ACK message, the calling device 110 may then respond with a TCP ACK message, acknowledging the CSCF's SYN message, similarly with no payload but with header parameters (i) indicating that it is an ACK message, (ii) indicating a sequence number one more than the sequence number in the calling device's SYN message (i.e., the same as the ACK number in the SYN/ACK message sent by the CSCF 114), and (iii) indicating an ACK number that is one more than the sequence number in the CSCF's SYN/ACK message. a sequence number typically one after the sequence number of the CSCF's ACK-SYN message. With this, the calling device 110 and CSCF 114 may thereby have an established TCP session through which they can engage in further TCP signaling with each other, typically with sequence numbering following that used in their handshake process.

Once the calling device 110 and the CSCF 114 have an established TCP session with each other, they may then communicate data with each other through that session, using a transmission and acknowledgement scheme as discussed above. Namely, as the transmitting end generates TCP packets, the transmitting device may send each TCP packet to the receiving end (i.e., pass the TCP packet from the transmitting device's TCP layer down the transmitting device's protocol stack for ultimate transmission over a physical communication path to the receiving device, and up the receiving device's protocol stack to the receiving device's TCP layer). Further, for each such packet, the transmitting device may expect to timely receive a corresponding TCP ACK from the receiving device and, absent timely receipt of such a TCP ACK, may then engage in retransmission of the TCP packet (limited by a maximum-retransmissions setting).

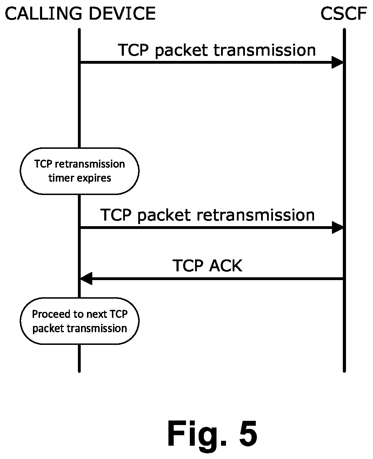

Figure 5 illustrates this TCP transmission and acknowledgement scheme, for transmission of an example TCP data packet from the calling device 110 to the CSCF 114. As shown in Figure 5, the calling device 110 first sends a TCP packet to the CSCF 114. Upon failure to receive a corresponding TCP ACK from the CSCF 114 within a defined retransmission timer period, the calling device 110 then retransmits the TCP packet to the CSCF 114. In turn, upon receipt of a corresponding TCP ACK from the CSCF 114, the calling device 110 may then proceed to transmit a next TCP packet to the CSCF 114, and so forth.

In line with the discussion above, for each TCP packet that TCP layer 304 of the calling device 110 seeks to send to the corresponding TCP layer of the CSCF 114, the TCP layer 304 may include in a header of the TCP packet a sequence number, which the TCP layer 304 would increase from the sequence number of its last TCP packet by a quantity equal to the number of bytes in its last TCP packet. Further, for each such TCP packet that the TCP layer 304 passes down to the IP layer 306 for processing, the TCP layer 304 may expect to receive from the CSCF 114, within the defined retransmission timer period, a TCP ACK carrying an ACK number that equals the next sequence number that TCP layer 304 would use. Absent receipt of such a TCP ACK, the TCP layer 304 may engage in retransmission as noted above. Likewise, when the TCP layer 304 receives a TCP data packet from the CSCF 114, the TCP layer 304 may expect that that TCP data packet will have an appropriate sequence number in view of what TCP transmissions the TCP layer 304 has so far received from the CSCF 114 in the TCP session.

Further in line with the discussion above, the TCP layer 304 may detect occurrence of various TCP errors. Namely, as discussed above, examples of these errors include (i) TCP retransmission, where the TCP layer 304 does not receive an expected ACK for a TCP packet and therefore retransmits the TCP packet, (ii) TCP duplicate ACKs, where the TCP layer 304 receives multiple ACKs specifying the same sequence number as each other, (iii) TCP out-of-order, where the TCP layer 304 receives a TCP packet with a sequence number higher than what the TCP layer 304 has acknowledged so far, and (iv) TCP previous-segment-not-captured, where the TCP layer 304 receives a TCP packet with a sequence number N without having received an earlier TCP packet whose sequence number plus data length equals N.

As noted above, these and/or other TCP errors could undesirably delay VoIP call setup, by delaying SIP signaling between the calling device 110 and the CSCF 114. This delay in VoIP call setup could occur at various stages of the process. For example, the delay could occur with respect to SIP registration, in a scenario where the calling device 110 responds to a user request to initiate a VoIP call by first engaging in SIP registration with the CSCF 114 before then sending a SIP INVITE for the call. As another example, the delay could occur in the SIP INVITE/OK/ACK messaging with the CSCF 114.

Further, the delay in SIP signaling could be caused by one or more TCP errors with respect to outbound SIP messaging and/or inbound SIP messaging. For instance, when the calling device 110 seeks to send a SIP INVITE message to the CSCF 114, one or more TCP errors in transmission of that SIP INVITE to the CSCF 114 may delay the process. In addition or alternatively, when the calling device 110 sends a SIP INVITE message to the CSCF 114 and expects to receive a SIP 100 TRYING message in response, one or more TCP errors in transmission of the SIP 100 TRYING message from the CSCF 114 to the calling device 110 may delay the process. Still further, the one or more TCP errors could occur in the TCP handshake process and/or in TCP data communication. Other examples are possible as well.

As additionally noted above, the application layer 302 of the calling device 110 may itself apply a Request-Timeout timer to help control how long to wait for successful SIP messaging. When the application layer 302 passes a SIP message down the protocol stack for transmission, the application layer 302 may start this timer, and upon expiration of the timer without the application layer 302 receiving an expected response to the SIP message, the application layer 302 may resend the SIP message or conclude that the call setup process failed.

In an effort to help avoid this problem, as noted above, the application layer 302 can put the TCP layer 304 into an error-reporting mode in which the TCP layer will inform the application layer 302 of a TCP-layer error count, and the application layer 302 can then detect when the TCP-layer error count becomes threshold high, at which point the application layer 302 can then trigger TCP connection-recovery and then re-provide the SIP message for processing.

In an example implementation, when operating in the error-reporting mode, the TCP layer 304 can keep track of a count of how many TCP errors have occurred, and, each time a TCP error occurs, the TCP layer 304 can report to the application layer 302 the current count. Each time the application layer 302 receives such a count from the TCP layer 304, the application layer can then determine if the reported current TCP-layer error count is at least as high as a predefined threshold count (e.g., by comparing the reported count with the threshold count). If the application layer 302 determines that the reported TCP-layer error count is less than the predefined threshold count, then, in response to the report, the application layer 302 may take no action. Whereas, if the application layer 302 determines that the reported TCP-layer error count is at least as high as the predefined threshold count, then the application layer 302 may trigger TCP connection-recovery and may re-provide the SIP message for processing.

In a variation of this implementation, the TCP layer 304 may provide such a report to the application layer 302 for each of a group of TCP errors, such as after every two TCP errors for instance. Further, in an alternative implementation, the TCP layer 304 may keep the application layer 302 apprised of the TCP-layer error count in another manner, to enable the application layer 302 to use the TCP-layer error count as basis to determine when the trigger a TCP connection-recovery and re-provide the SIP message for processing. For instance, doing so may involve reporting TCP-layer error occurrence to the application layer 302 and having the application layer 302 keep track of the count based on the reporting.

To facilitate this process, the program code of the TCP layer 304 may include a "Start TCP Error Notification Indication" function that the application layer 302 can call to transition the TCP layer 304 into the error-reporting mode. This function call could be structured with various arguments.

For instance, the function call could include a reset argument that resets or starts the TCP-layer error count. In an example implementation, the TCP-layer error count could be represented by the variable n, in which case this argument could set n equal to zero. Further, the function call can limit the TCP-layer error reporting to just one or more particular types of TCP errors if desired. For instance, the function call could include a bitmask that indicates which one or more TCP errors should be considered to increment the TCP-layer error count (thus excluding from the TCP-layer error count one or more other TCP errors). An example such bit mask could be a four-bit string, with each bit respectively representing a given TCP error and a value of 1 meaning that that error should be considered in the count or reported, and a value of 0 indicating that the error should not be considered in the count or reported. For instance, the least-significant digit (0001) could represent TCP "retransmission," the next most-significant digit (0010) could represent TCP "out-of-order," the next most-significant digit (0100) could represent "duplicate ACKs," and the most significant digit (1000) could represent "previous segment not captured."

When the application layer 302 calls this "Start TCP Error Notification Indication" function of the TCP layer 304, the TCP layer 304 may then enter into the error-reporting mode and respond to the application layer 302 with an "TCP Errors IND" message providing the current TCP-layer error count each time a TCP error occurs. For instance, if the error count is represented by variable n, the "TCP Errors IND" could carry or otherwise provide the application layer 302 with a current count value c of n, as "TCP Errors IND (n=c)".

The application layer 302 may be configured or may configure itself with the threshold count value, which may be represented by variable N. Each time the application layer 302 receives a current error count n from the TCP layer 304, the application layer 302 may then compare that reported error count n with the threshold value N, to determine whether n is at least as high as N, in order to determine whether to then trigger TCP reset and re-providing of the SIP message.

In addition, the program code of the TCP layer 304 may include a "Stop TCP Error Notification" function that the application layer 302 can call in order to stop the TCP layer's reporting of TCP errors. The application layer 302 can call this function once the application layer 302 determines that TCP-layer error reporting is no longer desired. For instance, once the application layer 302 receives an expected response to the application layer's SIP message, the application layer 302 may call this function to stop the TCP-layer error reporting.

Further, the program code of the TCP layer 304 may also include a "TCP Connection Recovery REQ" function that the application layer 302 can call in order to trigger TCP connection recovery. The application layer 302 may call this function to trigger TCP connection-recovery when the application layer 302 detects, based on reporting from the TCP layer 304, that the current TCP-layer error count is at least as high as the predefined error-count threshold. The TCP layer 304 could then respond to this function call by engaging in a TCP connection-recovery process, and the TCP layer 304 could then return a result message to the application layer 302, such as by transmitting to the application layer 302 a "TCP Connection Recovery RESP" message indicating whether the TCP connection-recovery was successful.

The TCP connection-recovery process that the TCP layer 304 would engage in upon receipt of the "TCP Connection Recovery REQ" could involve the TCP layer 304 transmitting to the CSCF 114 a TCP RST or TCP SYN message, to reestablish a TCP connection between the calling device 110 and the CSCF 114. For instance, the TCP layer 304 could send to the CSCF 114 a TCP RST message, which carries no payload but includes in its header an indication that it is a reset request. This reset request should result in teardown of the existing TCP session between the calling device 110 and the CSCF 114 and reestablishing of the TCP connection. Further, if the reset request results in teardown of the TCP session without reestablishing of the TCP connection, the TCP connection-recovery process may then involve the TCP layer 304 working to establish a new TCP session with the CSCF 114 such as by engaging in a new TCP handshake process as discussed above. In a scenario where the calling device 110 has a TCP connection with the CSCF 114 and also has one or more other TCP connections (e.g., a data TCP connection), the device could limit this TCP connection recovery to the TCP connection that it has with the CSCF 114.

If this or another such TCP connection-recovery process succeeds in reestablishing or otherwise recovering TCP connectivity between the calling device 110 and the CSCF 114, then the TCP layer 304 could return to the application layer 302 a DONE response. At that point, the application layer 302 may then re-provide the SIP message at issue, possibly setting its SIP Request-Timeout timer to half of what the application layer 302 had set it to in the first place, to help avoid having the call setup process run too long. Whereas, if this process fails, such that TCP connectivity is not recovered, then the TCP layer 304 could return to the application layer 302 a "FAIL" response, which may represent a failure in setup of the VoIP call.

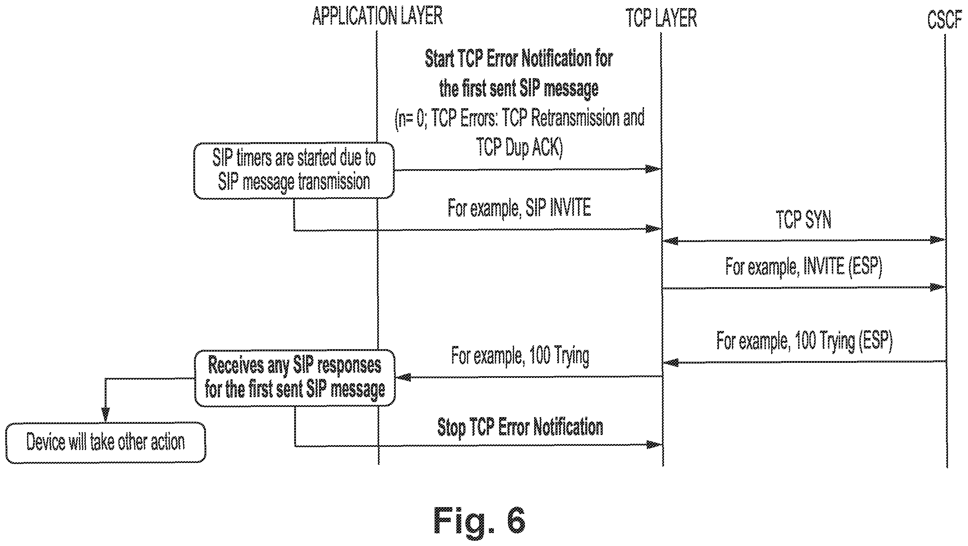

Figures 6-9 illustrate examples of how this process could work in practice.

Figure 6 illustrates an example of how the application layer 302 may cause the TCP layer 304 to start error reporting for an example SIP message and may then cause the TCP layer 304 to stop error reporting once the application layer 302 receives a response to the SIP message.

As shown in Figure 6, when the application layer is going to send a SIP INVITE message, the application layer 302 first directs the TCP layer 304 to start error reporting, by calling the "Start TCP Error Notification" function as described above. In this example, the application layer 302 resets the error count n to zero and includes bitmask 0101 to specify that the TCP layer 304 should report error count upon occurrence of each TCP retransmission error and/or each TCP duplicate ACKs error. The application layer 302 then passes the SIP INVITE message down the stack for processing. Having no TCP session yet with the CSCF 114, the TCP layer 304 then engages in the TCP handshake process with the CSCF 114. Then once a TCP session is established, the TCP layer 304 sends the SIP INVITE data as one or more TCP packets to the TCP layer of the CSCF 114. The CSCF 114 then responds to the calling device's SIP INVITE with a SIP 100 TRYING message, which passes up the calling device's protocol stack to the application layer 302. In response to timely receipt of this SIP response message, and perhaps further contingent on the application layer also receiving any additional expected SIP response messages such as a SIP 200 OK message, the application layer 302 then calls the "Stop TCP Error Notification" function of the TCP layer 304.

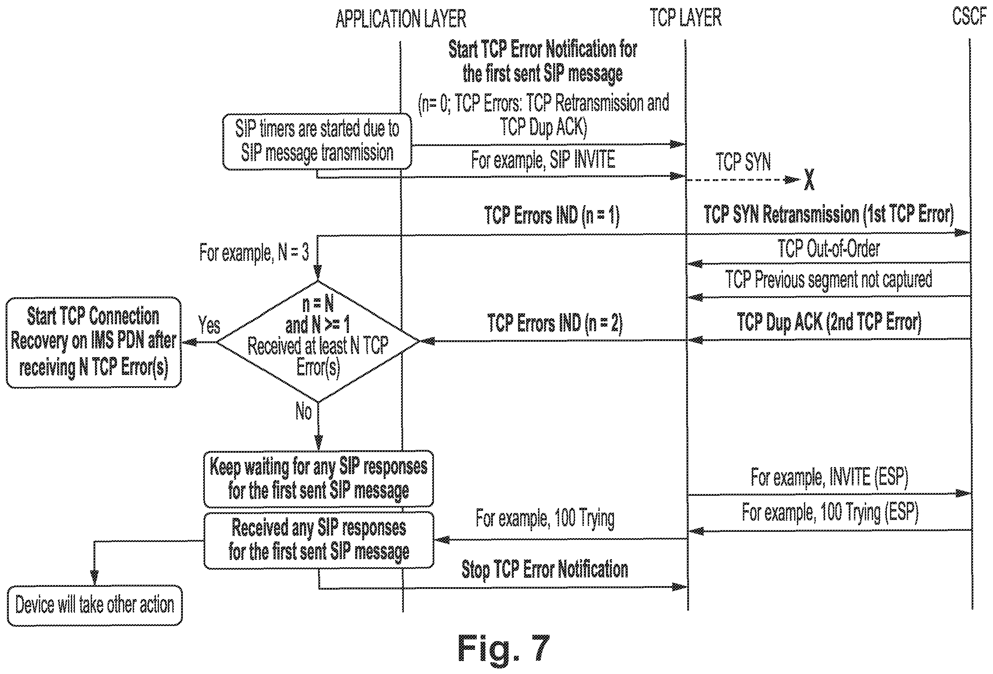

Figure 7 illustrates an example of how the process may play out instead where one or more TCP errors occur in the TCP handshake process. In particular, Figure 7 is a variation of the process shown in Figure 6, illustrating this.

As shown in Figure 7, when the TCP layer 304 sends a TCP SYN to the CSCF 114, the TCP layer 304 may detect absence of an expected SYN-ACK in response from the CSCF 114 and may therefore retransmit the TCP SYN. The TCP layer 304 may further provide a "TCP Errors IND" report to the application layer 302, reporting that the current TCP-layer error count is 1, i.e., that n=1. The figure assumes by way of example that the predefined threshold error count N is 3. Therefore, in response to this error report with a value n that is less than the threshold N, the application layer 302 may just continue to wait for a SIP response message.

As next shown, the TCP layer 304 may then detect occurrences of TCP out-of-order and previous-segment-not-captured errors, but these TCP errors may not trigger error reporting to the application layer 302, as these TCP errors were not included in the example bitmask in the application layer's "Start TCP Error Notification" call to the TCP layer 304. In turn, the TCP layer 304 then detects a TCP duplicate ACK error and may therefore provide the application layer with an error report indicating that the current TCP-layer error count is now 2, i.e., that n=2. Here again, because the reported error count is less than N, the application layer 302 may again continue to wait for a SIP response message.

In turn, processing may continue as in Figure 6, where the application layer 302 receives one or more expected SIP response messages and therefore directs the TCP layer 304 to stop the TCP error reporting.

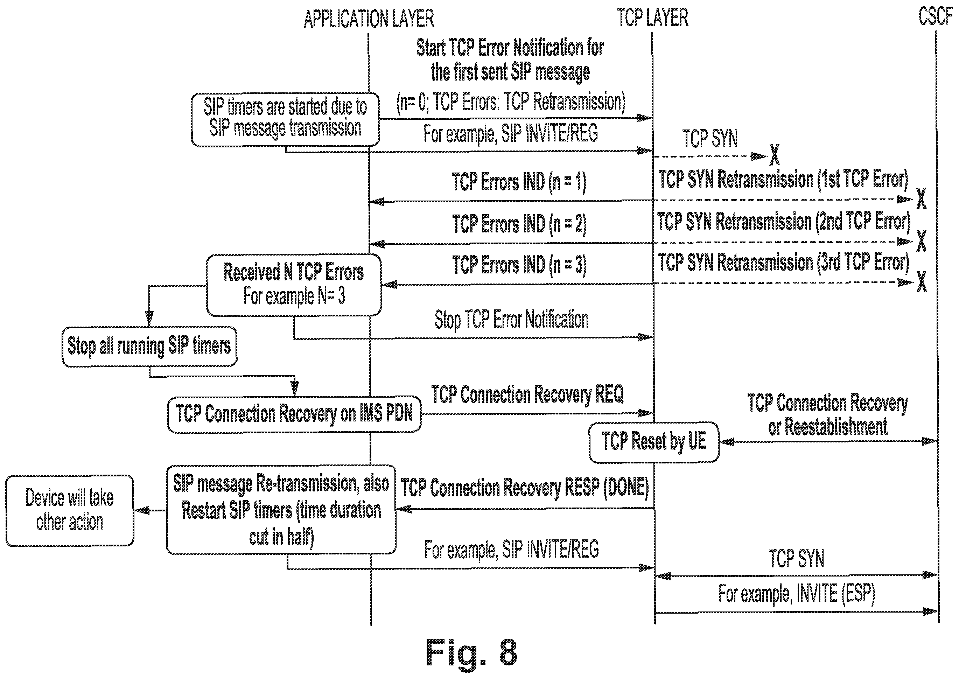

Figure 8 illustrates how the process may play out instead when an error report from the TCP layer 304 indicates that the current TCP-layer error count is a value that is at least as high as the threshold N and where TCP connection recovery succeeds. In particular, Figure 8 is a variation of Figure 6, illustrating this.

As shown in Figure 8, when the application layer 302 is going to send a SIP message such as a SIP INVITE or SIP REGISTER, the application layer 302 first directs the TCP layer 304 to start error reporting, by calling the "Start TCP Error Notification" function as described above. In this example, the application layer 302 resets the error count n to zero and includes bitmask 0001 to specify that the TCP layer 304 should report error count upon occurrence of each TCP retransmission error. The application layer 302 then passes the SIP message down the stack for processing.

As further, shown, the TCP layer 304 then experiences three TCP SYN retransmissions, each time reporting to the application layer the latest error count value n. Once the error count n equals the error count threshold N (e.g., N=3 and n=3), the application layer 302 then takes action to deal with the high TCP error count. Namely, the application layer 302 directs the TCP layer 304 to stop error reporting, by calling the "Stop TCP Error Notification" function. Further, the application layer 302 stops its SIP timer(s) and starts TCP connection recovery by calling the "TCP Connection Recovery REQ" function of the TCP layer 304. Upon successful TCP recovery, the TCP layer 304 then provides a positive "DONE" response to the application layer 302. Further, upon receipt of this DONE response, the application layer 302 then re-provides the SIP message for transmission, setting its SIP timer(s) to half value.

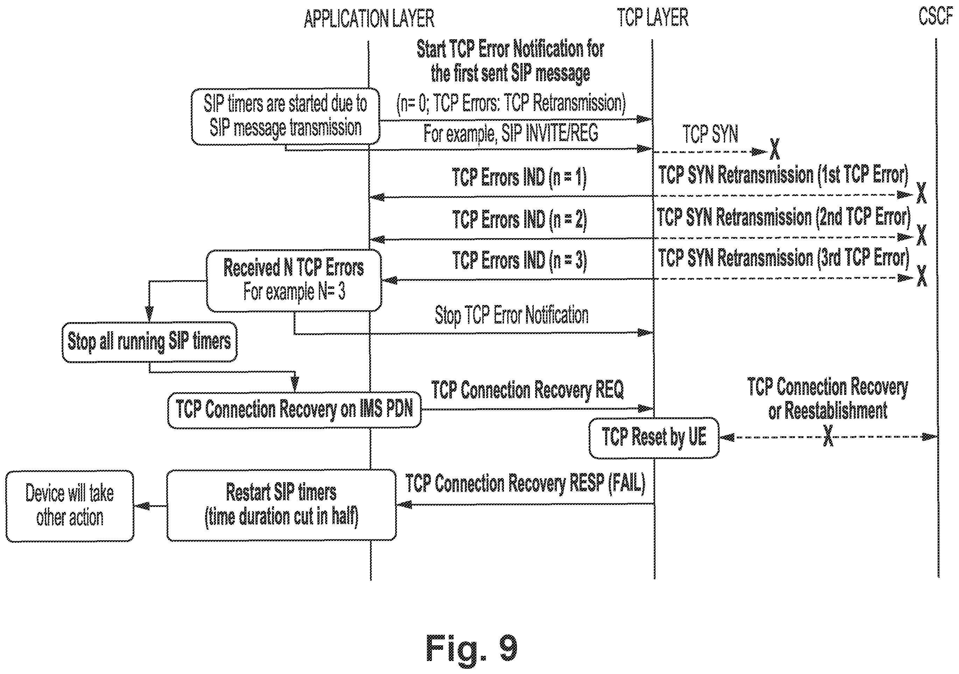

Figure 9 illustrates how the process may play out instead when an error report from the TCP layer 304 indicates that the current TCP-layer error count is a value that is at least as high as the threshold N and where TCP connection recovery does not succeed. In particular, Figure 9 is a variation of Figure 8, illustrating this. As shown in Figure 9, the TCP connection-recovery process does not succeed, and so the TCP layer 304 sends to the application layer 302 a "FAIL" response. At this point, the application layer 302 may try the process again with its SIP timer(s) set to half value, or the application layer 302 may consider the VoIP call-setup process to have failed.

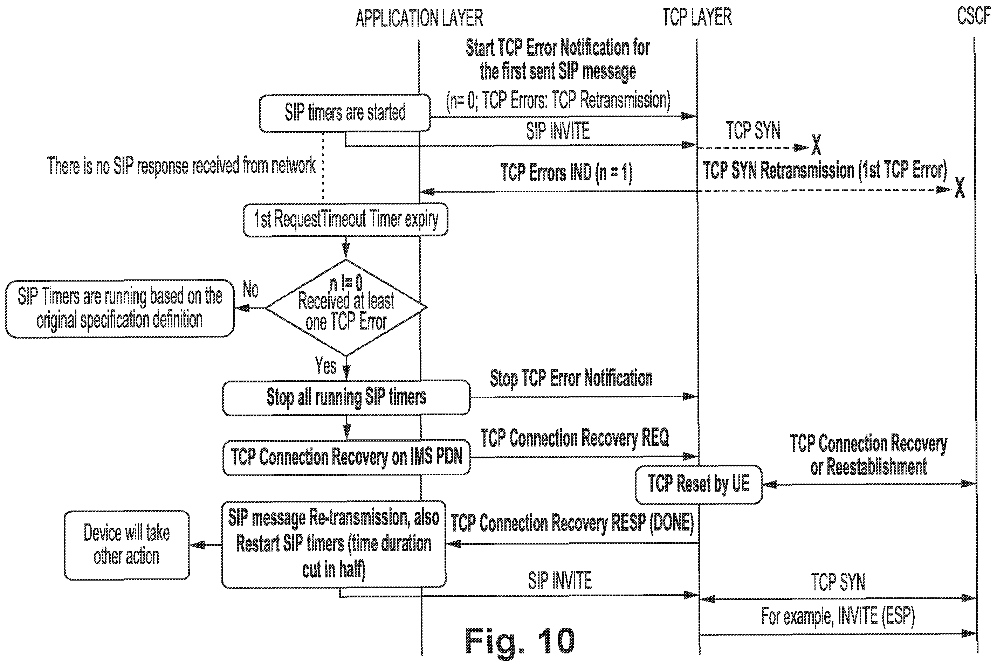

In a further or alternative implementation, the application layer 302 could be configured to trigger TCP connection recovery responsive to the application layer 302 (i) detecting a SIP request-timeout expiration and (ii) receiving from the TCP layer 304 a report indicating a TCP error count of at least one or at least some other threshold value. Figures 10-11 illustrate how this could work in practice.

Figure 10 illustrates an example of how the application layer 302 may trigger TCP connection recovery in this situation, with the connection recovery being successful.

As shown in Figure 10, when the application layer 302 is going to send a SIP INVITE message, the application layer 302 first directs the TCP layer 304 to start error reporting, by calling the "Start TCP Error Notification" function as described above. In this example again, the application layer 302 resets the error count n to zero and includes bitmask 0001 to specify that the TCP layer 304 should report error count upon occurrence of each TCP retransmission error. The application layer 302 then passes the SIP INVITE message down the stack for processing.

As further shown, the TCP layer 304 then experiences a TCP SYN retransmission and reports to the application layer 302 that the current error count is 1, i.e., that n=1. Further, the application layer 302 also detects a SIP request-timeout timer expiration. In response to the current TCP-layer error count being at least 1 and the SIP request-timeout timer expiration (e.g., in response to those factors in combination), the application layer 302 then takes action to deal with that situation. Namely, the application layer 302 directs the TCP layer 304 to stop error reporting, by calling the "Stop TCP Error Notification" function. Further, the application layer 302 stops its SIP timer(s) and starts TCP connection recovery by calling the "TCP Connection Recovery REQ" function of the TCP layer 304. Upon successful TCP recovery, the TCP layer 304 then provides a positive "DONE" response to the application layer 302. Further, upon receipt of this DONE response, the application layer 302 then re-provides the SIP INVITE message for transmission, setting its SIP timer(s) to half value.

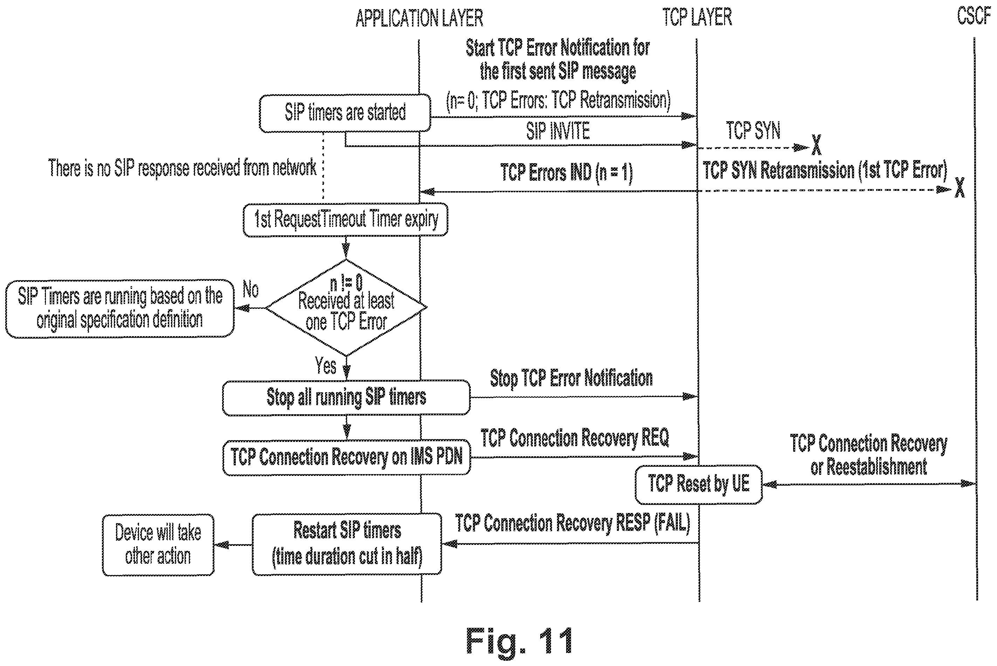

Figure 11 illustrates how this process may play out, on the other hand, where the TCP connection-recovery process does not succeed. In particular, Figure 11 is a variation of Figure 10, illustrating this. As shown in Figure 11, the TCP connection-recovery process does not succeed, and so the TCP layer 304 sends to the application layer 302 a "FAIL" response. At this point, the application layer 302 may try the process again with its SIP timer(s) set to half value, or the application layer 302 may consider the VoIP call-setup process to have failed.

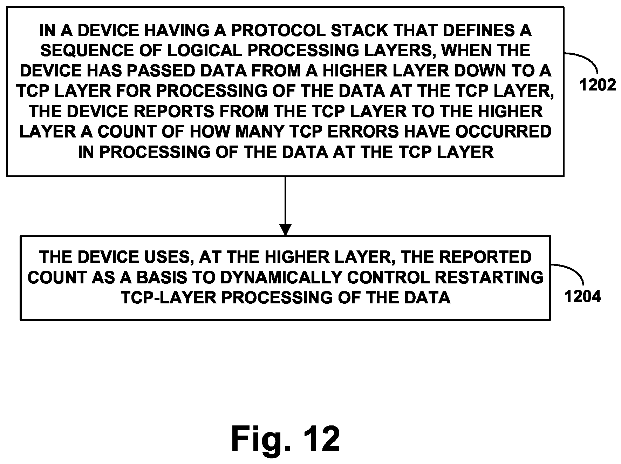

Figure 12 is next a flow chart illustrating a method that could be carried out in accordance with the present disclosure, to control TCP-layer processing in a device having a protocol stack that defines a sequence of logical layers through which the device is configured to process data for transmission from the device, the sequence of logical layers including a TCP layer and a higher layer that is earlier in the sequence than the TCP layer. As shown in Figure 12, at block 1201, the method includes, when the device has passed the data from the higher layer down to the TCP layer for processing of the data at the TCP layer, the device reporting from the TCP layer to the higher layer a count of how many TCP errors have occurred in processing of the data at the TCP layer. Further, at block 1204, the method includes the device using, at the higher layer, the reported count as a basis to dynamically control restarting TCP-layer processing of the data.

In line with the discussion above, the higher layer could be an application layer. Further, the data could represent a SIP message, which could be part of setup messaging for setting up a VoIP call. Still further, as discussed above, the TCP errors could include at least one error such as (i) TCP retransmission, (ii) TCP duplicate ACKs, (iii) TCP out of order, and/or (iv) TCP previous segment not captured.

In addition, as discussed above, the method could include the device providing from the higher layer to the TCP layer an instruction that causes the TCP layer an instruction that causes the TCP layer to engage in the reporting to the higher layer. For instance, as noted above, the higher layer could use a function call defined at the TCP layer. Alternatively, the higher layer may call another function to result in so instructing the TCP layer. Further, as discussed above, the device could include with the instruction a designation (e.g., bitmask indication) of one or more types of TCP errors to be included in the count.

As additionally discussed above, the TCP layer may have a TCP connection with a remote node, such as with a CSCF or other IMS entity for instance, and the act of restarting TCP-layer processing of the data could involve resetting that TCP connection, to help facilitate refreshed processing of the data possibly re-provided by the higher layer.

As further discussed above, the act of using by the device, at the higher layer, the reported count as a basis to control restarting TCP-layer processing of the data could involve (i) the device making a determination, at the higher layer, of whether the reported count is at least as high as a predefined threshold count and (ii) based at least on the determination being that the reported count is at least as high as the predefined threshold count, the device invoking the restarting of TCP-layer processing of the data, such as by sending a TCP connection-recovery request for instance.

In addition, as discussed above, the threshold count could be more than two or the threshold count could be just one. Further, as noted above, the higher layer could use both the reported count and its own timer expiration as a basis to trigger restarting of TCP-layer processing of the data. For instance, in a scenario where the device also applies at the higher layer a request-timeout timer for awaiting a response upon passing of the data from the higher layer down to the TCP layer, the act of the device using, at the higher layer, the reported count as a basis to control restarting TCP-layer processing of the data could involve (a) the device making a determination, at the higher layer, of whether both (i) the reported count is at least one and (ii) the request timeout timer has expired and (b) responsive to the determination being affirmative, the device invoking restarting of TCP-layer processing of the data.

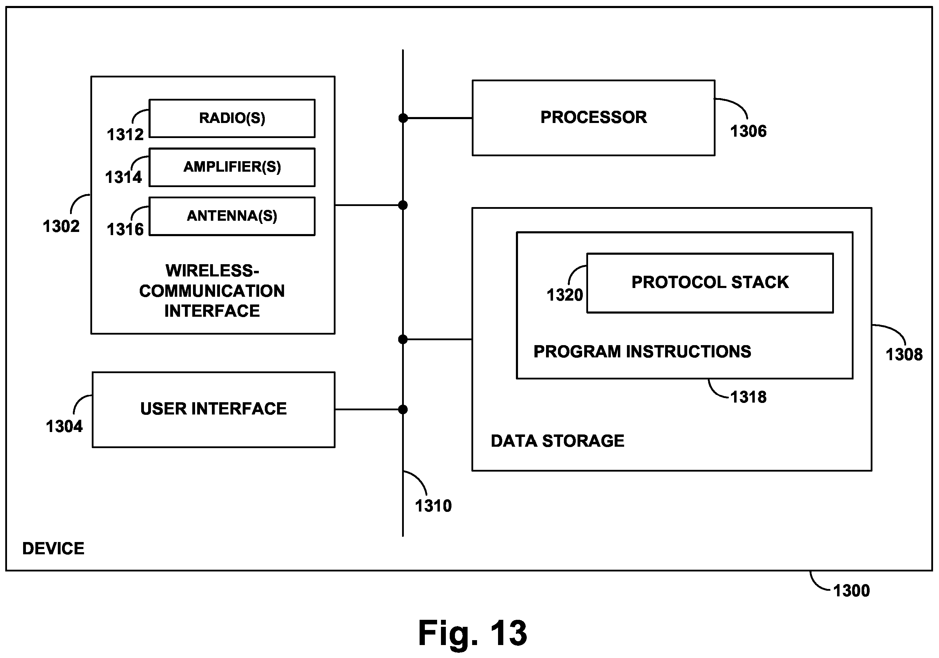

Figure 13 is a simplified block diagram of an example device 1300 that could be configured to carry out operations such those described above. For instance, this device could be the calling device 110 and/or another device that carries out the operations. The device illustrated here is a wireless communication device, such as a cell phone. However, the disclosed principles could apply as well with respect to other types of devices.

As shown in Figure 13, the example device includes a wireless-communication interface 1302, a user interface 1304, a processor 1306, and non-transitory data storage 1308, all of which could be integrated and/or communicatively linked together in various ways, such as through a system bus, network, or other connection mechanism 1310.

The wireless communication interface 1302 may comprise one or more modules to facilitate wireless communication between device 1300 and other entities. The wireless communication interface 1302 may support communication according to one or more air-interface protocols, such as WiFi, BLUETOOTH, UWB, and cellular (e.g., 4G, 5G, 6G, etc.) As shown, the wireless communication interface 1302 may include one or more radios 1312, one or more amplifiers 1314, and one or more antennas 1316. The one or more radios 1312 may include one or more radio transmitters configured to modulate baseband signals onto radio frequency (RF) carriers and one or more radio receivers configured to demodulate baseband signals from one or more RF carriers. The one or more amplifiers 1314 may be configured to amplify outbound signals for transmission and/or inbound signals for processing. And the one or more antennas 1316 may be configured to transmit and/or receive RF signals. The wireless communication module 1302 may further include various circuitry and/or other logic to facilitate operation according to an example air interface protocol.

The user interface 1304 may comprise one or more components to facilitate interaction with a user of device 1300. For instance, the user interface 1304 may include various output components such as a display screen, a sound speaker, indicator lights, and a haptic feedback interface, as well as associated circuitry and/or other logic to facilitate operation of those output components. Further, the user interface 1304 may include various input components, such as a touch-screen interface integrated with the display screen, a microphone, and a keypad, as well as associated circuitry and/or other logic to facilitate operation of those input components.

The processor 1306 may comprise one or more general purpose processors (e.g., one or more microprocessors, etc.) and/or one or more special-purpose processors (e.g., application-specific integrated circuits, etc.) Further, the non-transitory data storage 1308 may comprise one or more volatile and/or non-volatile storage components (e.g., read only memory, random access memory, flash storage, cache memory, etc.), possibly integrated in whole or in part with the processor 1306.

As shown, the data storage 1308 may store program instructions 1318, which may be executable by the processor 1306 to carry out various operations described herein. For instance, the program instructions 1318 may define a protocol stack 1320 and may be executable to carry out operations such as those described in connection with Figure 12, among other possibilities.

Various features described herein could be implemented in this context as well, and vice versa.

As additionally discussed above, the present disclosure also contemplates a non-transitory computer-readable medium (e.g., optical, magnetic, or flash storage, RAM, ROM, EPROM, EEPROM, etc.) having stored thereon program instructions executable by a processor of a device to cause the device to carry out various operations described herein, such as those described in connection with Figure 12, among other possibilities.

Example embodiments have been described above. Those skilled in the art will understand, however, that changes and modifications may be made to these embodiments without departing from the true scope of the invention, which is defined by the appended claims.

## Claims

1. A method for controlling Transport Control Protocol, TCP, processing in a device, wherein the device (110) has a protocol stack (300) defining a sequence of logical layers through which the device (110) is configured to process data for transmission from the device, the sequence of logical layers including a TCP layer (304) and a higher layer (302) that is earlier in the sequence than the TCP layer (304), the method including:
when the device (110) has passed the data from the higher layer (302) down to the TCP layer (304) for processing of the data at the TCP layer (304), reporting by the device, from the TCP layer (304) to the higher layer, a count of how many TCP errors have occurred in processing of the data at the TCP layer (304); and
using by the device (110), at the higher layer (302), the reported count as a basis to control restarting TCP-layer processing of the data.

2. The method of claim 1, wherein the higher layer (302) is an application layer.

3. The method of claim 1, wherein the data represents a Session Initiation Protocol, SIP, message.

4. The method of claim 3, wherein the SIP message is part of setup messaging for setting up a voice over Internet protocol, VoIP, call.

5. The method of claim 1, wherein the TCP errors comprise at least one error selected from the group consisting of (i) TCP retransmission, (ii) TCP duplicate ACKs, (iii) TCP out of order, and (iv) TCP previous segment not captured.

6. The method of claim 1, further comprising providing by the device (110) from the higher layer (302) to the TCP layer (304) an instruction that causes the TCP layer to engage in the reporting to the higher layer (302).

7. The method of claim 6, wherein providing by the device (110) from the higher layer (302) to the TCP layer (304) the instruction that causes the TCP layer to engage in the reporting to the higher layer comprises including with the instruction a designation of one or more types of TCP errors to be included in the count.

8. The method of claim 1, wherein the TCP layer has a TCP connection with a remote node, and wherein restarting TCP-layer processing of the data comprises resetting the TCP connection.

9. The method of claim 1, wherein using by the device (110), at the higher layer, the reported count as a basis to control restarting TCP-layer processing of the data comprises:
making a determination by the device (110), at the higher layer (302), of whether the reported count is at least as high as a predefined threshold count; and
based at least on the determination being that the reported count is at least as high as the predefined threshold count, invoking by the device (110) the restarting of TCP-layer processing of the data.

10. The method of claim 9, wherein the threshold count is at least two.

11. The method of claim 1, wherein the device (110) applies at the higher layer (302) a request-timeout timer for awaiting a response upon passing of the data from the higher layer down to the TCP layer (304), and wherein using by the device, at the higher layer, the reported count as a basis to control restarting TCP-layer processing of the data comprises:
making a determination by the device (110), at the higher layer (302), of whether both (i) the reported count is at least one and (ii) the request timeout timer has expired;
responsive to the determination being affirmative, invoking by the device the restarting of TCP-layer processing of the data.

12. A device (110) comprising:
a processor;
non-transitory data storage;
program instructions stored in the non-transitory data storage and executable by the processor to carry out the method of any one of the preceding claims.

13. A non-transitory computer-readable medium having stored thereon program instructions executable by a processor of a device to cause the device to carry out the method of any one of claims 1 to 11.

## Patentansprüche

1. Verfahren zum Steuern von Transportsteuerprotokoll-, TCP-, Verarbeitung in einer Vorrichtung, wobei die Vorrichtung (110) einen Protokollstapel (300) aufweist, der eine Abfolge von logischen Schichten definiert, durch die die Vorrichtung (110) konfiguriert ist, Daten zur Übertragung von der Vorrichtung zu verarbeiten, wobei die Abfolge von logischen Schichten eine TCP-Schicht (304) und eine höhere Schicht (302), die in der Abfolge früher als die TCP-Schicht (304) ist, beinhaltet, wobei das Verfahren beinhaltet:
wenn die Vorrichtung (110) die Daten von der höheren Schicht (302) hinunter an die TCP-Schicht (304) zum Verarbeiten der Daten an der TCP-Schicht (304) übergeben hat, Berichten durch die Vorrichtung, von der TCP-Schicht (304) an die höhere Schicht, einer Anzahl, wie viele TCP-Fehler beim Verarbeiten der Daten an der TCP-Schicht (304) aufgetreten sind; und
Verwenden durch die Vorrichtung (110), an der höheren Schicht (302), der berichteten Anzahl als Grundlage zum Steuern von Neustarten der TCP-Schichtverarbeitung der Daten.

2. Verfahren nach Anspruch 1, wobei die höhere Schicht (302) eine Anwendungsschicht ist.

3. Verfahren nach Anspruch 1, wobei die Daten eine Sitzungsinitiierungsprotokoll-, SIP-, Nachricht repräsentieren.

4. Verfahren nach Anspruch 3, wobei die SIP-Nachricht Teil einer Aufbaunachrichtenübermittlung zum Aufbauen eines Voice-over-Internet-Protokoll-, VoIP-, Anrufs ist.

5. Verfahren nach Anspruch 1, wobei die TCP-Fehler mindestens einen Fehler umfassen, der aus der Gruppe ausgewählt ist, die aus (i) TCP-Neuübertragung, (ii) doppelten TCP-ACKs, (iii) TCP-Fehlreihenfolge und (iv) nicht erfasstem vorherigem TCP-Segment besteht.

6. Verfahren nach Anspruch 1, ferner umfassend Bereitstellen durch die Vorrichtung (110) von der höheren Schicht (302) an die TCP-Schicht (304) einer Anweisung, die bewirkt, dass die TCP-Schicht das Berichten an die höhere Schicht (302) durchführt.

7. Verfahren nach Anspruch 6, wobei Bereitstellen durch die Vorrichtung (110) von der höheren Schicht (302) an die TCP-Schicht (304) der Anweisung, die bewirkt, dass die TCP-Schicht das Berichten an die höhere Schicht durchführt, Beinhalten mit der Anweisung einer Bezeichnung eines oder mehrerer Typen von TCP-Fehlern, die in die Anzahl einzubeziehen sind, umfasst.

8. Verfahren nach Anspruch 1, wobei die TCP-Schicht eine TCP-Verbindung mit einem entfernten Knoten aufweist, und wobei Neustarten der TCP-Schichtverarbeitung der Daten Zurücksetzen der TCP-Verbindung umfasst.

9. Verfahren nach Anspruch 1, wobei Verwenden durch die Vorrichtung (110), an der höheren Schicht, der berichteten Anzahl als Grundlage zum Steuern von Neustarten der TCP-Schichtverarbeitung der Daten umfasst:
Vornehmen einer Bestimmung durch die Vorrichtung (110), an der höheren Schicht (302), ob die berichtete Anzahl mindestens so hoch wie eine vordefinierte Schwellenwertanzahl ist; und
basierend mindestens darauf, dass die Bestimmung ergibt, dass die berichtete Anzahl mindestens so hoch wie die vordefinierte Schwellenwertanzahl ist, Aufrufen durch die Vorrichtung (110) des Neustartens der TCP-Schichtverarbeitung der Daten.

10. Verfahren nach Anspruch 9, wobei die Schwellenwertanzahl mindestens zwei ist.

11. Verfahren nach Anspruch 1, wobei die Vorrichtung (110) an der höheren Schicht (302) einen Anforderungszeitüberschreitungszeitgeber zum Warten auf eine Antwort bei Übergeben der Daten von der höheren Schicht hinunter an die TCP-Schicht (304) anwendet, und wobei Verwenden durch die Vorrichtung, an der höheren Schicht, der berichteten Anzahl als Grundlage zum Steuern von Neustarten der TCP-Schichtverarbeitung der Daten umfasst:
Vornehmen einer Bestimmung durch die Vorrichtung (110), an der höheren Schicht (302), ob sowohl (i) die berichtete Anzahl mindestens eins ist als auch (ii) der Anforderungszeitüberschreitungszeitgeber abgelaufen ist;
als Reaktion auf die Bestimmung, die bejahend ist, Aufrufen durch die Vorrichtung des Neustartens der TCP-Schichtverarbeitung der Daten.

12. Vorrichtung (110), umfassend:
einen Prozessor;
einen nichtflüchtigen Datenspeicher;
Programmbefehle, die in dem nichtflüchtigen Datenspeicher gespeichert und durch den Prozessor ausführbar sind, um das Verfahren nach einem der vorhergehenden Ansprüche auszuführen.

13. Nichtflüchtiges computerlesbares Medium, das darauf gespeicherte Programmbefehle aufweist, die durch einen Prozessor einer Vorrichtung ausführbar sind, um die Vorrichtung zu veranlassen, das Verfahren nach einem der Ansprüche 1 bis 11 auszuführen.

## Revendications

1. Procédé de commande du traitement du protocole de contrôle de transmission, TCP, dans un dispositif, dans lequel le dispositif (110) possède une pile de protocoles (300) définissant une séquence de couches logiques à travers lesquelles le dispositif (110) est configuré pour traiter les données à transmettre depuis le dispositif, la séquence de couches logiques comportant une couche TCP (304) et une couche supérieure (302) située en amont de la couche TCP (304) dans la séquence, le procédé comportant :
lorsque le dispositif (110) a transmis les données de la couche supérieure (302) à la couche TCP (304) pour traitement des données au niveau de la couche TCP (304), le signalement par le dispositif, depuis la couche TCP (304) vers la couche supérieure, du nombre d'erreurs TCP survenues lors du traitement des données au niveau de la couche TCP (304) ; et
l'utilisation par le dispositif (110), au niveau de la couche supérieure (302), du comptage signalé comme base pour commander le redémarrage du traitement des données au niveau de la couche TCP.

2. Procédé selon la revendication 1, dans lequel la couche supérieure (302) est une couche d'application.

3. Procédé selon la revendication 1, dans lequel les données représentent un message du protocole d'initiation de session, SIP.

4. Procédé selon la revendication 3, dans lequel le message SIP fait partie de la messagerie de configuration pour établir un appel de voix sur protocole Internet, VoIP.

5. Procédé selon la revendication 1, dans lequel les erreurs TCP comprennent au moins une erreur sélectionnée parmi le groupe constitué de (i) retransmission TCP, (ii) ACK TCP dupliqués, (iii) TCP hors séquence et (iv) segment TCP précédent non capturé.

6. Procédé selon la revendication 1, comprenant en outre la fourniture par le dispositif (110) de la couche supérieure (302) vers la couche TCP (304) d'une instruction qui amène la couche TCP à effectuer le signalement à la couche supérieure (302).

7. Procédé selon la revendication 6, dans lequel la fourniture par le dispositif (110) de la couche supérieure (302) vers la couche TCP (304) de l'instruction qui amène la couche TCP à effectuer le signalement à la couche supérieure comprend l'inclusion avec l'instruction d'une désignation d'un ou de plusieurs types d'erreurs TCP à inclure dans le comptage.

8. Procédé selon la revendication 1, dans lequel la couche TCP dispose d'une connexion TCP avec un nœud distant, et dans lequel le redémarrage du traitement des données au niveau de la couche TCP comprend la réinitialisation de la connexion TCP.

9. Procédé selon la revendication 1, dans lequel l'utilisation par le dispositif (110), au niveau de la couche supérieure, du comptage signalé comme base pour commander le redémarrage du traitement des données au niveau de la couche TCP comprend :
le fait de déterminer par le dispositif (110), au niveau de la couche supérieure (302), si le comptage signalé est au moins égal à un nombre de seuils prédéfini ; et
basé au moins sur la détermination selon laquelle le comptage signalé est au moins aussi élevé que le nombre de seuils prédéfini, le déclenchement par le dispositif (110) du redémarrage du traitement des données au niveau de la couche TCP.

10. Procédé selon la revendication 9, dans lequel le nombre de seuils est d'au moins deux.

11. Procédé selon la revendication 1, dans lequel le dispositif (110) applique, au niveau de la couche supérieure (302), un temporisateur de délai d'expiration des requêtes pour attendre une réponse lors du passage des données de la couche supérieure à la couche TCP (304), et dans lequel l'utilisation par le dispositif, au niveau de la couche supérieure, du comptage signalé comme base pour commander le redémarrage du traitement des données au niveau de la couche TCP, comprend :
le fait de déterminer par le dispositif (110), au niveau de la couche supérieure (302), si (i) le comptage signalé est au moins un et (ii) le délai d'expiration de la requête a expiré ;
si la condition de détermination est remplie, le déclenchement par le dispositif du redémarrage du traitement des données au niveau de la couche TCP.

12. Dispositif (110) comprenant :
un processeur ;
le stockage de données non transitoire ;
des instructions de programme stockées dans le stockage de données non transitoire et exécutables par le processeur pour mettre en œuvre le procédé selon l'une quelconque des revendications précédentes.

13. Support non transitoire lisible par ordinateur, sur lequel sont stockées des instructions de programme exécutables par un processeur d'un dispositif pour amener le dispositif à mettre en œuvre le procédé selon l'une quelconque des revendications 1 à 11.
